# EUROPÄISCHE PATENTANMELDUNG

(11) **EP 1 667 113 A2**
(43) Veröffentlichungstag der Anmeldung: **07.06.2006**
(21) Anmeldenummer: 05110178.0
(22) Anmeldetag: 31.10.2005
(51) Int. Cl.: G10L 21/02

(54) **Verfahren zur selektiven Aufnahme eines Schallsignals**

(30) Priorität: 17.11.2004 DE 102004000043
(71) Anmelder: SIEMENS AKTIENGESELLSCHAFT, 80333 München (DE)
(72) Erfinder: Guitarte Perez, Jesus Fernando, 80335 München (DE); Hoffmann, Gerhard, 82223 Eichenau (DE); Lukas, Klaus, 81739 München (DE)

(57) **Zusammenfassung**

Bei Verfahren zur selektiven Aufnahme eines Sprachsignals findet üblicherweise durch das System keine Fokussierung auf den Sprecher in einer Sprechergruppe statt, welcher dem System tatsächlich etwas übermitteln möchte. Aufgabe der vorliegenden Erfindung ist es daher, ein Verfahren anzugeben, durch das eine solche Unterscheidung ermöglicht wird. Erfindungemäß wird diese Aufgabe durch ein Verfahren gelöst, bei welchem durch einen Bildanalysealgorithmus zumindest eine Position einer Person mithilfe eines Erkennungsmerkmales identifiziert wird, die dem System Sprachkommandos geben will. Anschließend wird ein direktives Mikrophon mithilfe der erkannten Position auf die zumindest eine Person adaptiert.

## Beschreibung

### Stand der Technik

### Verfahren zur selektiven Aufnahme eines Schallsignals

Die vorliegende Erfindung betrifft ein Verfahren, eine Vorrichtung und ein Steuerungsprogramm zur selektiven Aufnahme eines Schallsignals.

Spracherkennungssysteme liefern in geräuschbehafteten Umgebungen oft niedrige Erkennungsraten. Speziell bei Neben- und/oder Hintergrundgeräuschen durch andere Sprecher ist für das Spracherkennungssystem eine Fokussierung auf den Hauptsprecher schwierig. Dies wird noch erschwert, wenn umgebungs- und situationsbedingt keine Nahmikrophone, wie Headsets, verwendet werden können. Beispiele sind im Automotive-Bereich sowie in medizinischen und in industriellen Umgebungen zu finden, wo Headsets nicht eingesetzt werden können oder dürfen.

Der Einsatz von direktiven Mikrophonen, wie beispielsweise Mikrophonarrays, verspricht eine deutliche Verbesserung der Erkennungsraten speziell in Umgebungen mit mehreren Sprechern und Geräuschquellen, da Neben- und/oder Hintergrundgeräusche ausgeblendet werden können. Zur genauen Fokussierung der direktiven Mikrophone ist derzeit allerdings eine Kenntnis der genauen Positionierung des Sprechers erforderlich. Dies ist beispielsweise in Fahrzeugumgebungen gegeben, in anderen Umgebungen hingegen, wie beispielsweise im medizinischen Umfeld, arbeiten die Mitglieder eines Operationsteams an unterschiedlichen Positionen und verändern auch ihre Positionen während der Operation. Auch im industriellen Umfeld ist bei der Bedienung und Montage von Anlagen eine Kenntnis der genauen Positionierung des kommandogebenden Bedienpersonals schwierig.

Mit Mikrophonarrays können über die unterschiedlichen Laufzeiten der mit den einzelnen Mikrophonen aufgenommenen Audiodaten Informationen über die Lage und die Stärke von Schallquellen ermittelt werden. Somit kann eine Sprecherposition bestimmt werden, allerdings können den Audiodaten keine Informationen darüber entnommen werden, wer gerade der zu fokussierende Sprecher ist, dessen Kommandoworte ausgeführt werden sollen.

Ein weiterer Ansatz zur Bestimmung der Sprecherposition ist in F. Asano, Y. Motomura, H. Asoh, T. Yoshimura, N. Ichimura, K. Yamamoto, N. Kitawaki und S. Nakamura, "Detection and Separation of Speech Segment Using Audio and Video Information Fusion" in EUROSPEECH 2003, Geneva beschrieben. Hierbei werden anhand von visuellen Signalen die Positionen von Sprechern erkannt und direktive Mikrophone mit Hilfe der bestimmten Positionen auf die Sprecher ausgerichtet. Bei diesem Verfahren wird nicht unterschieden, welcher der Sprecher dem System Kommandos übermitteln möchte.

Nachteilig bei den vorgestellten Verfahren ist also, dass keine Unterscheidung stattfindet, welcher Sprecher eines Bedienpersonals dem System Kommandos gibt und welcher nur mit seinen Kollegen kommuniziert. Sollen die Kommandos für die Spracherkennung also beispielsweise von verschiedenen, spezifischen Personen eines Bedienpersonals abgegeben werden können, so ist eine Identifizierung dieser Personen durch die vorgestellten Verfahren nicht möglich.

### Aufgabe der Erfindung

Der vorliegenden Erfindung stellt sich somit die Aufgabe, ein Verfahren zur selektiven Aufnahme eines Schallsignals anzugeben, durch das eine Fokussierung auf diejenigen Personen innerhalb einer Personengruppe ermöglicht wird, deren Signale vom System aufgenommen werden sollen.

### Beschreibung der Erfindung

Erfindungsgemäß wird diese Aufgabe durch ein Verfahren, eine Vorrichtung und ein Steuerungsprogramm mit den in Anspruch 1, Anspruch 9 und Anspruch 11 angegebenen Merkmalen gelöst. Vorteilhafte Weiterbildungen der vorliegenden Erfindung sind in den abhängigen Ansprüchen angegeben.

Entsprechend der vorliegenden Erfindung werden in einem Verfahren zur selektiven Aufnahme eines Schallsignals in einem ersten Schritt Bilder von zumindest teilweise in Reichweite eines direktiven Mikrophons befindlichen Personen durch ein Aufzeichnungsmedium aufgenommen. In einem zweiten Schritt erkennt ein Bildanalysealgorithmus zumindest eine Position einer Person mithilfe eines vorgebbaren Erkennungsmerkmales. Schließlich wird in einem dritten Schritt das direktive Mikrophon mithilfe der erkannten Position auf die zumindest eine Person adaptiert. In vorteilhafter Weise wird mit dem vorgeschlagenen Verfahren mithilfe visueller Informationen die Fokussierung von direktiven Mikrophonen optimiert. Daher sind vor allem Verbesserungen der Erkennungsleistung für stark mit Nebensprechergeräuschbehaftete Umgebungen durch gezielte Ausblendungen zu erwarten. Speziell in medizinischen oder industriellen Umgebungen, wo keine Headsets eingesetzt werden können oder dürfen, kann das Verfahren neue Anwendungen für die Spracherkennung entstehen lassen, bei denen die konventionelle Spracherkennung aufgrund der Geräuschumgebung bisher nicht oder nur eingeschränkt einsetzbar war.

Bildanalyseverfahren sind beispielsweise ohne Beschränkung der Allgemeinheit dieses Begriffs Verfahren zur Mustererkennung bzw. zur Detektion von Objekten in einem Bild. Üblicherweise wird bei diesen Verfahren in einem ersten Schritt eine Segmentierung vorgenommen, bei dem eine Zuordnung von Bildpunkten zu einem Objekt erfolgt. In einem zweiten Schritt wird anhand morphologischer Verfahren die Gestalt und/oder die Form der Objekte identifiziert. Letztlich werden in einem dritten Schritt zur Klassifizierung die identifizierten Objekte bestimmten Klassen zugewiesen. Typische Beispiele hierfür sind unter anderem die Handschriftenerkennung, aber auch Gesichtslokalisationsverfahren.

Nach einer besonders vorteilhaften Ausgestaltung der vorliegenden Erfindung ist der Bildanalysealgorithmus als Gesichtslokalisationsverfahren ausgebildet. Als Erkennungsmerkmal zur Identifizierung derjenigen Person aus einer Personengruppe, die dem System Sprachkommandos geben möchte, wendet sich die Person dem Aufzeichnungsmedium zu. In vorteilhafter Weise kann hierbei durch ein einfaches Erkennungsmerkmal kenntlich gemacht werden, welche Person dem System Anweisungen geben möchte.

Gemäß einer weiteren vorteilhaften Weiterbildung der vorliegenden Erfindung ist die Person zumindest teilweise im Gesicht durch ein Kleidungsmittel, insbesondere durch eine Gesichtsmaske oder einen Mundschutz, verdeckt. Das Zuwenden der Person wird durch den Bildanalysealgorithmus mithilfe einer Kantendetektion des Kleidungsmittels erkannt. So ist auch eine Erkennung des Zuwendens einer Person möglich, wenn das Gesicht der Person aufgrund der äußeren Umstände nur teilweise zu erkennen ist und daher ein Gesichtslokalisationsalgorithmus nicht uneingeschränkt anwendbar ist. Dies ist beispielsweise in einem Operationssaal der Fall, in dem die Chirurgen nur mit Mundschutz arbeiten dürfen. Aber auch im industriellen Umfeld ist das Personal häufig gezwungen, Schutzkleidung zu tragen.

Gemäß weiteren vorteilhaften Ausführungsvarianten der vorliegenden Erfindung ist das direktive Mikrophon als Mikrophonarray ausführbar. Außerdem ist das direktive Mikrophon mit Hilfe eines Beamformingalgorithmus auf die Person adaptierbar.

Ein Mikrophonarray besteht üblicherweise aus einer Anordnung von zumindest zwei Mikrophonen, und dient zur gerichteten Aufnahme von Schallsignalen. Die Schallsignale werden durch die Mikrophone zeitgleich aufgezeichnet und anschließend mittels eines Beamformingalgorithmus zeitlich derart gegeneinander verschoben, dass die Laufzeit des Schalls zwischen jedem einzelnen Mikrophon und dem zu beobachtenden Quellobjekt kompensiert wird. Durch Addition der Laufzeit korrigierten Signale verstärken sich die vom zu beobachtenden Quellobjekt abgestrahlten Anteile konstruktiv, während sich die Anteile von anderen Quellobjekten statistisch ausmitteln.

Entsprechend der vorliegenden Erfindung weist eine Vorrichtung zur selektiven Aufnahme eines Schallsignals ein Aufzeichnungsmedium zur Aufnahme von zumindest teilweise in Reichweite eines direktiven Mikrophons befindlichen Personen auf, wobei ein Bildanalysealgorithmus zumindest eine Position einer Person mithilfe eines vorgebbaren Erkennungsmerkmales erkennt. Außerdem weist die Vorrichtung ein direktives Mikrophon zur Adaptierung auf die erkannte Position der Person auf, wobei eine relative Position des direktiven Mikrophons zum Aufzeichnungsmedium bekannt ist.

Gemäß einer vorteilhaften Weiterbildung der vorliegenden Erfindung ist das direktive Mikrophon in örtlicher Nähe zum Aufzeichnungsmedium angebracht. Dies hat die vorteilhafte Wirkung, dass eine leichte Adaptierung des direktiven Mikrophons ermöglicht wird, da die Person in Richtung des Mikrophons spricht.

Bei der Ausführung des erfindungsgemäßen Steuerungsprogramms werden durch die Programmablaufsteuerungseinrichtung in einem ersten Schritt Bilder von zumindest teilweise in Reichweite eines direktiven Mikrophons befindlichen Personen durch ein Aufzeichnungsmedium aufgenommen. In einem zweiten Schritt erkennt ein Bildanalysealgorithmus zumindest eine Position einer Person mithilfe eines vorgebbaren Erkennungsmerkmales. Schließlich wird in einem dritten Schritt das direktive Mikrophon mithilfe der erkannten Position auf die zumindest eine Person adaptiert.

### Bezugszeichenliste

### Beispiele

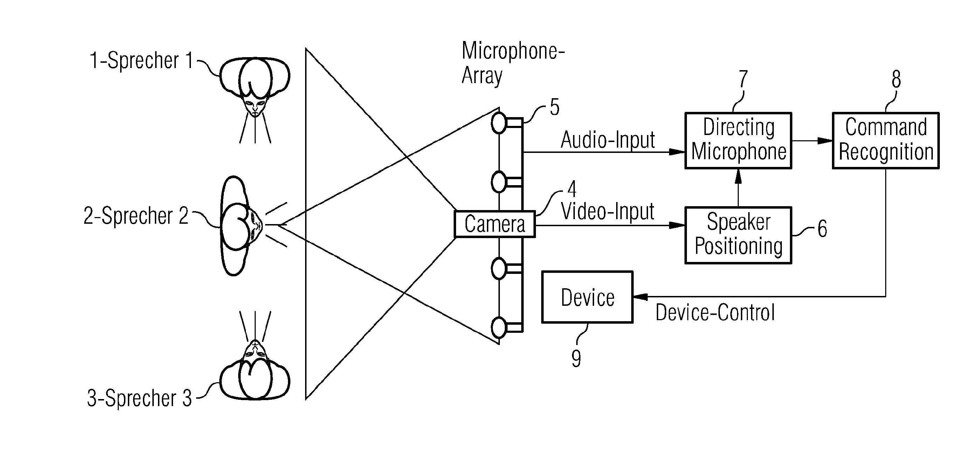

Die vorliegende Erfindung wird nachfolgend an einem Ausführungsbeispiel anhand der Zeichnung näher erläutert. Es zeigt die

Figur eine schematische Darstellung eines Verfahrens zur videobasierten Fokussierung von Mikrophonarrays.

Die Figur zeigt drei Sprecher 1, 2 und 3, eine Videokamera 4 und ein Mikrophonarray 5. In 6 bis 9 ist der Verfahrensablauf zur selektiven Aufnahme eines Schallsignals schematisch dargestellt.

In diesem Ausführungsbeispiel sprechen die drei Sprecher 1, 2, 3, die sich in Reichweite des Mikrophonarrays 5 befinden, gleichzeitig. Alle drei Sprecher 1,2 und 3 werden hierbei von der Videokamera 4 aufgezeichnet, die in diesem Beispiel als CCD (charge coupled device)- Kamera ausgebildet ist. Bei den erfassten Bild handelt es sich daher um ein von einer elektronischen Kamera 4 (CCD-Kamera) erfasstes Bild, das elektronisch verarbeitbar ist, weshalb das erfasste Bild aus einzelnen Bildpunkten mit einem jeweiligen zugeordneten Graustufenwert zusammengesetzt ist. Die Sprecher 1 und 3 blicken dabei nicht in die Videokamera 4, während sich Sprecher 2 der Videokamera 4 zuwendet und frontal in die Videokamera 4 blickt. Nach einer bevorzugten Ausführungsvariante der vorliegenden Erfindung ist das Zuwenden zum Aufzeichnungsmedium ein vorgebbares Erkennungsmerkmal für das System, mit dem kenntlich gemacht wird, dass Sprecher 2 ein Kommando an das System geben möchte.

In einem ersten Verfahrensschritt 6 wird durch einen Bildanalysealgorithmus erkannt, dass sich nur Sprecher 2 der Videokamera zuwendet und somit dem System Sprachkommandos geben möchte. In diesem Ausführungsbeispiel erkennt der Bildanalysealgorithmus anhand eines Gesichtslokalisationsverfahrens, dass nur das Gesicht von Sprecher 2 der Videokamera 2 frontal zugewendet ist.

Ein geometrisches Verfahren zum Analysieren eines Bildes, um das Vorhandensein und die Position eines Gesichts zu bestimmen, umfasst zunächst ein Festlegen von Segmenten in dem erfassten Bild, die helligkeitsspezifische Merkmale aufweisen. Die helligkeitsspezifischen Merkmale können beispielsweise Hell-Dunkel-Übergänge und/oder Dunkel-Hell-Übergänge umfassen. Anschließend wird eine positionsmäßige Beziehung der festgelegten Segmente zueinander überprüft, wobei ein Vorhandensein eines (menschlichen) Gesichts, insbesondere an einer bestimmten Position in dem erfassten Bild, abgeleitet wird, wenn eine Auswahl von festgelegten Segmenten eine bestimmte positionsmäßige Beziehung aufweist. Das bedeutet, durch das gerade beschriebene Verfahren kann durch Analyse bestimmter Bereiche des erfassten Bildes, nämlich der Segmente mit helligkeitsspezifischen Merkmalen, genauer gesagt durch Überprüfen der positionsmäßigen Beziehung der festgelegten Segmente auf das Vorhandensein eines Gesichts, insbesondere menschlichen Gesichts, geschlossen werden.

Insbesondere werden Segmente in dem erfassten Bild festgelegt, bei denen die helligkeitsspezifischen Merkmale scharfe bzw. abrupte Helligkeitsübergänge, beispielsweise von Dunkel nach Hell oder von Hell nach Dunkel aufweisen. Derartige (scharfe) Helligkeitsübergänge finden sich beispielsweise in einem Gesicht eines Menschen, insbesondere beim Übergang von der Stirn zu den Augenbrauen oder (bei Menschen mit heller Haarfarbe) beim Übergang von der Stirn in den Schatten der Augenhöhlen. Derartige (scharfe) Helligkeitsübergänge finden sich jedoch auch beim Übergang von dem Oberlippenbereich bzw. Lippenbereich zur Mundöffnung oder von der Mundöffnung zum Lippenbereich der Unterlippe bzw. zum Unterlippenbereich. Ein weiterer Helligkeitsübergang stellt sich zwischen der Unterlippe und dem Kinnbereich, genauer gesagt als Schattenbereich (je nach Lichtverhältnis bzw. Lichteinfall) basierend auf einer leichten Vorwölbung der Unterlippe, ein. Durch eine Vorverarbeitung des Bilds mittels eines Gradientenfilters können (scharfe) Helligkeitsübergänge, wie die an den Augenbrauen, an den Augen, oder an dem Mund besonders hervorgehoben und sichtbar gemacht werden.

Zum Überprüfen der positionsmäßigen Beziehung der ermittelten Segmente wird beispielsweise in einem ersten Untersuchungsschritt jedes der festgelegten Segmente dahingehend untersucht, ob zu einem zu untersuchenden Segment ein zweites festgelegtes Segment existiert, das auf einer horizontalen Linie bzw. einer im Wesentlichen horizontal verlaufenden Linie zu dem gerade untersuchten festgelegten Segment liegt. Ausgehend von einem erfassten Bild, bestehend aus einer Mehrzahl von Bildpunkten muss das zweite Segment nicht unbedingt auf einer der von dem zu untersuchenden Segment umfassten wagrechten Linie an Bildpunkten liegen, es kann auch um einen vorbestimmten kleinen Betrag an Bildpunkten höher oder tiefer bezüglich der wagrechten oder horizontalen Line liegen. Wird ein zweites festgelegtes horizontales Segmente gefunden, so wird nach einem dritten festgelegten Segment gesucht, das sich unterhalb des untersuchten und des zweiten festgelegten Segments befindet und für das gilt, dass ein Abstand von dem untersuchten zu dem zweiten festgelegten Segment und ein Abstand einer Verbindungsstrecke zwischen dem untersuchten und dem zweiten festgelegten Segment zu dem dritten festgelegten Segment ein erstes vorbestimmtes Verhältnis aufweist. Insbesondere kann eine Normale zu der Verbindungsstrecke zwischen dem untersuchten und dem zweiten festgelegten Segment definiert werden, wobei der Abstand von dem dritten Segment (entlang der Normalen) zu der Verbindungsstrecke zwischen dem untersuchten und dem zweiten festgelegten Segment in das erste vorbestimmte Verhältnis eingeht. Durch den gerade beschriebenen ersten Untersuchungsschritt kann somit auf das Vorhandensein eines Gesichts geschlossen werden, indem die positionsmäßige Beziehung zwischen drei festgelegten Segmenten ermittelt wird. Hierbei wird davon ausgegangen, dass das untersuchte und das zweite festgelegte Segment einen jeweiligen Augenbrauenabschnitt im Gesicht eines Menschen darstellt, der nor-malerweise einen markanten bzw. scharfen Hell-Dunkel-Helligkeitsübergang von oben nach unten aufweist und somit gut erkennbar ist. Das dritte festgelegte Segment stellt ein Segment einer Mundpartie bzw. den zwischen Oberlippe und Unterlippe Schatten bildenden Grenzbereich dar. Neben der Möglichkeit, Augenbrauen als markante Segmente mit helligkeitsspezifischen Merkmalen zu verwenden, ist es auch möglich, an Stelle der Augenbrauen Schatten bildende Bereiche der Augenhöhlen bzw. die Augen oder die Iris selbst zu verwenden. Das Verfahren ist beliebig erweiterbar auf zusätzliche zu untersuchende Segmente, die beispielsweise eine Erkennung einer Brille oder zusätzliche verifizierende Merkmale (Nase, geöffnete Mundpartie) einschließen.

Insbesondere ist das Verfahren auch auf Mitglieder eines Operationsteams erweiterbar, die aus Hygienegründen auf das Tragen eines Mundschutzes angewiesen sind. Hierbei kann als zusätzliches Merkmal neben der Erkennung der Augenbrauen eine Identifizierung der Kanten des Mundschutzes stattfinden und/oder alternativ ein zuätzliches optisches Merkmal wie beispielsweise ein waagerechter Strich, der eine Mundpartie simuliert, auf dem Mundschutz aufgedruckt werden und zur Identifizierung herangezogen werden.

Durch beispielsweise zumindest zwei räumlich voneinander getrennt angeordnete Kameras (beispielsweise CCD-Zeilenkameras), die gleichzeitig Bilder der in der Reichweite des direktiven Mikrofons befindlichen Personen aufzeichnen und deren relative Lage zueinander bekannt ist, kann die räumliche Position des Sprechers 2 rekonstruiert werden.

In einem zweiten Verfahrensschritt 7 wird das Mikrophonarray 5 mithilfe der erkannten Position auf den Sprecher 2 ausgerichtet. Hierdurch kann eine selektive Aufnahme des Sprachsignals von Sprecher 2 durch das Mikrophonarray 5 erfolgen.

Ein Mikrophonarray besteht üblicherweise aus einer Anordnung von zumindest zwei Mikrophonen, und dient zur gerichteten Aufnahme von Schallsignalen. Die Schallsignale werden durch die Mikrophone zeitgleich aufgezeichnet und anschließend mittels eines Beamformingalgorithmus zeitlich derart gegeneinander verschoben, dass die Laufzeit des Schalls zwischen jedem einzelnen Mikrophon und dem zu beobachtenden Quellobjekt kompensiert wird. Durch Addition der Laufzeit korrigierten Signale verstärken sich die vom zu beobachtenden Quellobjekt abgestrahlten Anteile konstruktiv, während sich die Anteile von anderen Quellobjekten statistisch ausmitteln.

In einem dritten Verfahrensschritt 8 wird das durch das ausgerichtete Mikrophonarray 5 aufgezeichnete Schallsignal durch ein Spracherkennungssystem ausgewertet. Die somit erhaltenen und ausgewerteten Kommandos von Sprecher 2 werden nun an die Vorrichtung 9 weitergeleitet und von dieser ausgeführt.

Durch die konzentrische Anordnung von Videokamera 4 und Mikrophonarray 5 wird in diesem Beispiel die Ausrichtung des Mikrophonarrays 5 auf den erkannten Sprecher 2 erheblich vereinfacht, da sich der Sprecher 2 der Videokamera 4 und damit gleichsam dem Mikrophonarray 5 zuwendet, um somit kenntlich zu machen, dass er dem System Sprachkommandos übermitteln möchte.

Die Anwendung der vorliegenden Erfindung ist nicht auf das beschriebene Ausführungsbeispiel beschränkt.

## Patentansprüche

1. Verfahren zur selektiven Aufnahme eines Schallsignals, bei dem in einem ersten Schritt Bilder von zumindest teilweise in Reichweite eines direktiven Mikrophons befindlichen Personen durch ein Aufzeichnungsmedium aufgenommen werden,
in einem zweiten Schritt ein Bildanalysealgorithmus zumindest eine Position einer Person mithilfe eines vorgebbaren Erkennungsmerkmales erkennt,
in einem dritten Schritt das direktive Mikrophon mithilfe der erkannten Position auf die zumindest eine Person adaptiert wird.

2. Verfahren nach Anspruch 1, wobei der Bildanalysealgorithmus als Gesichtlokalisationsverfahren ausgebildet ist.

3. Verfahren nach mindestens einem der vorhergehenden Ansprüche, wobei als Erkennungsmerkmal eine sich dem Aufzeichnungsmedium zuwendende Person verwendet wird.

4. Verfahren nach Anspruch 3, wobei
die Person zumindest teilweise im Gesicht durch ein Kleidungsmittel, insbesondere durch eine Gesichtsmaske oder einen Mundschutz, verdeckt ist,
dass Zuwenden der Person durch den Bildanalysealgorithmus mithilfe einer Kantendetektion des Kleidungsmittels erkannt wird.

5. Verfahren nach Anspruch 3, wobei
die Person zumindest teilweise im Gesicht durch ein Kleidungsmittel, insbesondere durch eine Gesichtsmaske oder einen Mundschutz, verdeckt ist,
das Zuwenden der Person durch den Bildanalysealgorithmus mithilfe eines zusätzlichen optischen Merkmals auf dem Kleidungsmittel erkannt wird.

6. Verfahren nach mindestens einem der vorhergehenden Ansprüche, wobei als Erkennungsmerkmal ein optisches Merkmal wie Farbe und/oder Textur verwendet wird.

7. Verfahren nach mindestens einem der vorhergehenden Ansprüche, wobei das direktive Mikrophon als Mikrophonarray ausgeführt ist.

8. Verfahren nach mindestens einem der vorhergehenden Ansprüche, wobei das direktive Mikrophon mithilfe eines Beamformingalgorithmus auf die Person adaptiert wird.

9. Vorrichtung zur selektiven Aufnahme eines Schallsignals, welche
ein Aufzeichnungsmedium zur Aufnahme von Bildern von zumindest teilweise in Reichweite eines direktiven Mikrophons befindlichen Personen aufweist, wobei ein Bildanalysealgorithmus zumindest eine Position einer Person mithilfe eines vorgebbaren Erkennungsmerkmales erkennt,
ein direktives Mikrophon zur Adaptierung auf die erkannte Position der Person aufweist, wobei eine relative Position des direktiven Mikrophons zum Aufzeichnungsmedium bekannt ist.

10. Vorrichtung nach Anspruch 9, wobei
das direktive Mikrophon in örtlicher Nähe zum Aufzeichnungsmedium angebracht ist.

11. Steuerungsprogramm, das in einen Arbeitsspeicher einer Programmablaufsteuerungseinrichtung ladbar ist und zumindest einen Codeabschnitt aufweist, bei dessen Ausführung
in einem ersten Schritt Bilder von zumindest teilweise in Reichweite eines direktiven Mikrophons befindlichen Personen durch ein Aufzeichnungsmedium aufgenommen werden,
in einem zweiten Schritt ein Bildanalysealgorithmus zumindest eine Position einer Person mithilfe eines vorgebbaren Erkennungsmerkmales erkennt,
in einem dritten Schritt das direktive Mikrophon mithilfe der erkannten Position auf die zumindest eine Person adaptiert wird, wenn das Steuerungsprogramm in der Programmablaufsteuerungseinrichtung abläuft.
